# NEUE EUROPÄISCHE PATENTSCHRIFT

(11) **EP 3 359 469 B2**
(45) Veröffentlichungstag und Bekanntmachung des Hinweises auf die Entscheidung über den Einspruch: **29.09.2021**
(45) Hinweis auf die Patenterteilung: 10.04.2019
(21) Anmeldenummer: 16828714.2
(22) Anmeldetag: 16.12.2016
(51) Int. Cl.: B65D 85/804, B65D 73/00, C08L 29/00

(54) **SAUERSTOFFDICHTER LEBENSMITTELBEHÄLTER**
FOODCONTAINER IMPERMEABLE TO OXYGEN
RÉCIPIENT POUR NOURRITURE IMPERMEBLE AU OXYGÉN

(30) Priorität: 01.02.2016 DE 102016201498
(43) Veröffentlichungstag der Anmeldung: 15.08.2018
(73) Patentinhaber: Kuhl, Norbert, 83355 Erlstätt (DE); Wassmer, Martin, 1824 Caux (CH)
(72) Erfinder: Kuhl, Norbert, 83355 Erlstätt (DE); Wassmer, Martin, 1824 Caux (CH)
(74) Vertreter: Kuhnen & Wacker Patent- und Rechtsanwaltsbüro PartG mbB
(86) Internationale Anmeldenummer: PCT/EP2016/081458
(87) Internationale Veröffentlichungsnummer: WO 2017/133820

(56) Entgegenhaltungen:
- EP-A1- 0 584 590
- EP-A1- 0 603 876
- EP-A2- 0 157 612
- EP-A2- 0 441 666
- WO-A1-92/16583
- WO-A1-93/20140
- WO-A1-2007/118280
- WO-A1-2009/153275
- WO-A1-2014/202694
- WO-A1-2015/082982
- WO-A1-2015/158838
- WO-A2-2015/177591
- CN-A- 102 977 565
- CN-A- 103 044 716
- DE-A1- 19 802 718
- GB-A- 2 189 789
- JP-A- 2003 026 887
- JP-A- 2005 015 814
- US-A- 4 261 473
- US-A- 5 349 000
- US-A- 5 393 804
- US-A1- 2002 128 384
- US-A1- 2013 131 224
- US-A1- 2015 274 413
- G. BLEISCH et al.: Lexikon Verpackungstechnik, 2014, Behr's Verlag Hamburg
- R. LIPPMANN et al.: Verpackungstechnik, 1985, VEB Fachbuchverlag Leipzig

## Beschreibung

Die Erfindung betrifft einen Kunststoff-Lebensmittelbehälter nach Anspruch 1, eine Lebensmittelbehälter-Deckelfolie nach Anspruch 5 als auch eine Lebensmittel-Verpackungseinheit nach Anspruch 8, die einen mit einer Deckelfolie verschlossenen Lebensmittelbehälter umfasst. Der erfindungsgemäße Lebensmittelbehälter ist vorgesehen für die Aufnahme von flüssigen, pastösen, festen, pulverförmigen, insbesondere gemahlenen, oder rieselfähigen Lebensmitteln.

Der erfindungsgemäße Lebensmittelbehälter ist beispielsweise Teil einer Kunststoff-Kaffee- oder Teekapsel. Der erfindungsgemäße Lebensmittelbehälter ist insbesondere auch für die Aufnahme von Milchprodukten oder anderem Brühgut als Kaffee oder Tee, beispielsweise für Instantgetränke oder Instantsuppen, geeignet.

Kunststoff-Lebensmittelbehälter sind in der Regel nicht diffusionsdicht bzw. gasdicht, insbesondere nicht dicht gegenüber den Eintritt von Sauerstoff, der mit dem im Lebensmittelbehälter aufgenommenen Lebensmittel in Wechselwirkung treten kann. Bei Verwendung eines Lebensmittelbehälters für sauerstoff-empfindliche Lebensmittel ist dieser daher bevorzugt mit einer gasdichten, wasserfesten, aromadichten und lebensmittelechten Beschichtung bzw. Barriereschicht zu versehen, will man Qualitätseinbußen durch eine Einwirkung von Sauerstoff auf das darin aufgenommene Lebensmittel auf ein Minimum reduzieren oder gar verhindern. Darüber hinaus stellt eine solche Barriereschicht eine Aromadichtheit bereit, die das im Lebensmittelbehälter aufgenommene Lebensmittel davor bewahrt, auch nach längerer Zeit sein Aroma nicht zu verlieren. Beispielsweise, jedoch nicht ausschließlich, ist bei der Verwendung des Lebensmittelbehälters als Brühgutaufnahmeeinheit darüber hinaus eine Wasserdampfbarriere vorzusehen, damit wasserlösliche Stoffe des Lebensmittelbehälters oder seiner Deckelfolie während des Brühvorgangs nicht an- oder gar aufgelöst werden.

Aus WO 2014/067 507 A2 ist eine Kapsel zur Aufnahme eines Brühguts wie Kaffee, Tee oder dergleichen bekannt. Die Kapsel ist aus einem Kunststoff, insbesondere aus PBT oder einem Kunststoff der PBT-Familie ausgebildet. WO 2014/067 507 A2 schlägt als Gasbarriereschicht eine Oberflächenbeschichtung zum Erzielen einer Sauerstoffdichtheit vor und führt weiter aus, die Gasbarriereschicht im Plasmabedampfungsverfahren u.a. durch die Verwendung von Silicium aufzubringen. Ein solches Plasmabedampfungsverfahren arbeitet mit Siliciumoxiden, die in einem (Hoch-)Vakuum mittels eines elektrisch durch Hochspannung erzeugten Lichtbogens verdampft werden, wobei sich der Siliciumoxiddampf im Weiteren auf die in der Vakuumkammer befindlichen Gegenstände, u.a. auf die Kaffeekapseln, absetzt. In DE 10 2011 052 149 A1 wird für dieses Verfahren für die Beschichtung von Lebensmittelverpackungsbehältern weiter gefordert, dass hierfür Siliciumoxide SiOx verwendet werden sollen, bei denen x eine Zahl < 2 bevorzugt < 0,9 sein soll. Als weiteres Beschichtungsverfahren zum Erreichen einer Sauerstoffdichtheit schlägt DE 10 2011 052 149 A1 u.a. eine Plasmapolymerisation vor, bei der bevorzugt Organosilane verwendet werden sollen. Alle diese Verfahren haben den Nachteil, dass sie ein technisch aufwendiges Verfahren darstellen, das zudem sehr kostenintensiv ist. Darüber hinaus ist der Aufwand zum Erzielen einer geeigneten Sauerstoffdichtigkeit, beispielsweise zum Erzielen einer längeren Mindesthaltbarkeitszeit, verhältnismäßig hoch und daher meist unwirtschaftlich gegenüber sauerstoffdichten Verpackungsbeuteln, in denen die Kaffeekapseln zum Erreichen der geforderten Mindesthaltbarkeit zusätzlich verpackt werden können.

WO 2015/177591 A2 beschreibt ebenfalls eine Kapsel zur Verwendung in einer Vorrichtung für die Zubereitung von Getränkten mit einem einstückigen, spritzgegossenem Grundkörper, der eine Wandung, einen Boden sowie einen nach außenstehenden Kragen aufweist, der eine Öffnung umgibt. Der Grundkörper besteht aus einem spritzgegossenen Laminat von zwei Schichten aus PLA zwischen denen eine Schicht aus PVOH angeordnet ist. In den Druckschriften WO 2013/120997 A1, US 2010/0051861 A1 und US 7 048 975 B1 sind weitere Kunststoffbehälter beschrieben, welche zum Erreichen der Anforderungen an solche Behälter mehrschichtig aufgebaut sind. Es ist allgemein bekannt, dass für die Herstellung mehrschichtiger Materialien mehrere Arbeitsschritte oder Prozessschritte, die teilweise mehr oder minder zeitversetzt ablaufen können, erforderlich sind.

DE 689 07 387 T2, von der im Oberbegriff des Anspruchs 1 ausgegangen wird, verbessert die Gasbarriere-Eigenschaft von Polybutylenterephthalat (PBT) durch Hinzumischen eines Olefin-Vinylalkohol-Copolymers, insbesondere durch Hinzumischen von EVOH, zum Erzeugen eines Verpackungsmaterials für Lebensmittel mit verbesserter Gasundurchlässigkeit. Sowohl PBT als auch EVOH sind bei der Verwendung als Lebensmittelverpackung nicht unumstritten.

WO 2015/158838 A1 offenbart eine tiefgezogene oder spritzgegossene Portionskapsel zur Zubereitung von Getränken, wobei der Kapselkörper allgemein aus einer tiefgezogenen Kunststofffolie oder im Kunststoffspritzgussverfahren aus einem Kunststoff, einem Naturstoff und/oder einem biologisch abbaubaren Werkstoff herstellbar sein soll.

WO 2014/202694 A1 offenbart eine Portionskapsel zur Zubereitung von Getränken aus einem Getränk- /Lebensmittelmaterial, das in dem Hohlraum einer Umhüllung vorgesehen ist. Die Umhüllung kann flüssigkeits- und/oder im Wesentlichen gasdicht, aber auch abschnittsweise wasserdurchlässig sein, wobei die Umhüllung in einer bevorzugten Ausführung mehrere Schichten aufweist.

Die Aufgabe der vorliegenden Erfindung besteht darin, einen gasdichten, insbesondere Sauerstoff-dichten, wasserfesten, wasserdampfbeständigen, aromadichten und lebensmittelechten Lebensmittelbehälter sowie, zum Verschließen desselbigen, eine Lebensmittel-Deckelfolie hierfür bereitzustellen. Dabei sollen bei der Herstellung der beiden Verpackungsbestandteile die aus dem Stand der Technik bekannten Nachteile überwunden werden und insbesondere zusätzliche Verpackungsbeutel/-folien vermeidbar sein. In einer weiteren Ausgestaltung des Lebensmittelbehälters und der Deckelfolie sollen diese darüber hinaus biologisch abbaubar sein, bevorzugt nach EN 13432 bzw. EN 14995. Die Herstellung des Lebensmittelbehälters sowie der Lebensmittelbehälter-Deckelfolie soll dabei einfach und kostengünstig sein, wobei der Lebensmittelbehälter als auch die Lebensmittelbehälter-Deckelfolie robust ausgestaltet sein sollen.

Die Aufgabe wird durch einen Lebensmittelbehälter nach Anspruch 1 und durch eine Lebensmittel-Deckelfolie nach Anspruch 5 gelöst. Bevorzugte Ausführungsformen des Lebensmittelbehälters sind in den von Anspruch 1 abhängigen Unteransprüchen angegeben, wobei bevorzugte Ausführungsformen der Deckelfolie in den von Anspruch 5 abhängigen Unteransprüchen angegeben sind. Die erfindungsgemäße Aufgabe wird ferner durch eine Lebensmittel-Verpackungseinheit nach Anspruch 8 gelöst, wobei auch hier die von Anspruch 8 abhängigen Unteransprüche auf bevorzugte Ausführungsformen der erfindungsgemäßen Lebensmittel-Verpackungseinheit gerichtet sind.

Der erfindungsgemäße Lebensmittelbehälter zur Aufnahme eines flüssigen, pastösen oder rieselfähigen Lebensmittels weist einen einstückigen, spritzgegossenen, becherförmigen Grundkörper auf, der aus einer Wandung, einem Boden und einem nach außen vorstehenden Kragen gebildet wird. Der nach außen vorstehende Kragen umgibt eine Öffnung, welche durch die erfindungsgemäße Lebensmittelbehälter-Deckelfolie verschließbar ist.

Der erfindungsgemäße Lebensmittelbehälter ist aus einem Polymerblend spritzgegossen, welches zumindest zwei Komponenten aufweist. Eine der beiden Komponenten ist ein PVOH (Polyvinylalkohol), der auch als PVAL bezeichnet wird, oder ein PVOH-Copolymer. Durch das Spritzgießen eines thermoplastischen Polymerblends bestehend aus einem thermoplastischen Kunststoff, der selbstredend aus einem für Lebensmittelbehälter zugelassenen Kunststoff ausgewählt ist, und einem damit vermengten PVOH oder PVOH-Copolymer, welches ebenfalls einen thermoplastischen Kunststoff darstellt, wird ein insgesamt sauerstoffdichter Kunststoff-Lebensmittelbehälter bereitgestellt. Im weiteren Verlauf der Erfindungsbeschreibung sollen unter der Bezeichnung PVOH auch PVOH-Copolymere fallen, deren Polymere aus zwei oder mehr verschiedenartigen Monomereinheiten zusammengesetzt sind, wobei eine der Monomereinheiten Vinylalkohol ist.

Unter einem Polymerblend, was vielfach auch einfach nur als Polyblend bezeichnet wird, versteht man eine Mischung zweier Polymere im festen Zustand ohne dass zwischen den beiden Kunststoffen eine chemische Reaktion stattfindet. Bei einer solchen rein physikalischen Mischung entstehen zwischen den Makromolekülen der eingesetzten Kunststoffe keine chemischen Bindungen. Ein Beispiel für ein erfindungsgemäß verwendetes Polymerblend ist PE/PVOH oder auch PS/PVOH, wobei der Schrägstrich zwischen den beiden Kunststoffbezeichnungen andeutet, dass es sich hier um ein Polyblend bzw. Polymerblend handelt. Ein anderes beispielhaft verwendetes Polymerblend stellt PE/EVOH dar, wobei EVOH ein Ethylen/Vinyl-Alkohol-Copolymer ist. Im Sinne der Erfindung ist EVOH ein spezielles Ausführungsbeispiel für die zweite Komponente eines erfindungsgemäß verwendbaren Polymerblends. EVOH fällt somit im Sinne der Erfindung unter die Bezeichnung PVOH. Für die Herstellung von Lebensmittelbehältern können jedoch neben den beiden zuvor genannten Nicht-PVOH-Kunststoffen, PE und PS, auch beispielsweise Polypropylen (PP) oder Polyamid (PA), als auch andere zugelassene thermoplastische Kunststoffe im erfindungsgemäß spritzgegossenen Polymerblend verwendet werden.

Beträgt der Gewichtsanteil von PVOH bzw. PVAL, mehr als 15%, so lässt sich eine Zunahme der Sauerstoffdichtheit nachweisen, die mit steigendem Gewichtsanteil zunimmt. Mit der Zunahme der Sauerstoffdichtheit erreicht man eine längere Mindesthaltbarkeit, was mit der Aufrechterhaltung der Qualität der im Lebensmittelbehälter aufgenommenen Lebensmittel über einen längeren Zeitraum einhergeht. Mit Zunahme des Gewichtsanteils an PVOH lässt sich die Sauerstoffdichtheit weiter steigern, wobei je nach Verwendung der Nicht-PVOH-Komponente bei ca. 70% Gewichtsanteil eine gewisse Sättigung hinsichtlich der Zunahme der Sauerstoffdichtheit erreicht ist. Durch die Verwendung eines Polymerblends können die physikalischen Eigenschaften des erfindungsgemäßen Lebensmittelbehälters besser beeinflusst bzw. gesteuert werden, als bei einem nur ein-materialigen, thermoplastischen Kunststoff als Ausgangsstoff für das Spritzgießen. Die unvermischte Verwendung von PVOH würde zwar auch zu einem sauerstoffdichten Lebensmittbehälter führen, jedoch sind dessen mechanische Eigenschaften, beispielsweise die Materialhärte, in vielen Anwendungsfällen nicht ausreichend. Dies lässt sich durch Beimengung eines geeigneten, weiteren thermoplastischen Kunststoffes kompensieren bzw. einstellen.

Wie oben bereits ausgeführt, kann als Nicht-PVOH- bzw. PVOH-Copolymer-Komponente jeder lebensmittelechte, d.h. für Lebensmittel zugelassene thermoplastische und spritzgießfähige Kunststoff neben der PVOH bzw. PVOH-Copolymer-Komponente verwendet werden, wobei in einer Ausführungsform der Erfindung die weitere Komponente des erfindungsgemäß eingesetzten Polymerblends ein Biopolymer ist. Im Sinne der Erfindung soll unter Biopolymer ein Polymer verstanden werden, das biologisch abbaubar ist, jedoch nicht zwingend aus nachwachsenden Rohstoffen hergestellt wurde. Jedoch finden erfindungsgemäß auch native Polymere, wie Cellulose - Stärke - Protein - Milchsäure - oder andere, auf nachwachsenden Rohstoffen basierende Kunststoffe, als eine Komponente für das erfindungsgemäß verwendete Polymerblend Einsatz. Des Weiteren finden erfindungsgemäß biobasierte Polymere Einsatz, welche beispielsweise aus organischen Verbindungen, wie Stärke, Saccharose oder Glukose hergestellt werden. Zu den biobasierten Polymeren zählen ferner auch Thermoplaste auf Ligninbasis oder auch Epoxyacrylate auf Basis von Ölen, beispielsweise Lein- oder Palmöl. Auch diese Biopolymere sind vom Erfindungsgedanken umfasst.

Soweit erdölbasierte Polymere biologisch abbaubar sind, fallen sie im Sinne der Erfindung unter den Begriff Biopolymer, auch wenn sie nicht biogen sind, d.h. aus nicht nachwachsenden Rohstoffen erzeugt wurden. Als Beispiele für abbaubare, erdölbasierte Polymere kann man etwa bestimmte Polyester nennen, aber auch der für die zweite Komponente des Polymerblends verwendete Polyvinylalkohol sowie Polybutylenadipat-terephthalat (PBAT), Polybutylensuccinat (PBS), Polycaprolactone (PCL) oder Polyglycolid (PGA) stellen nicht-biogene Kunststoffe dar, sind jedoch im Sinne der Erfindung Biopolymere, da biologisch abbaubar. Zu diesen in der Erfindung als Biopolymere, also als biologisch abbaubare Polymere bezeichneten Kunststoffen gehören beispielsweise auch aus Polyhydroxyalkanoate, Polyhydroybutyrate, Polycaprolacton, Polyester, Stärke, Ingeo TM, Lignin, Naturharzen, Naturwachsen, Naturölen, natürlichen Fettsäuren, Cellulose, Proteinen oder Glukose hergestellte thermoplastische Kunststoffe. Die vorstehende Aufzählung der erfindungsgemäß einsetzbaren Biopolymere erhebt jedoch keinen Anspruch auf Vollständigkeit.

Die Verwendung von Biopolymeren und PVOH in einem Polymerblend, d.h. in einem Biopolymerblend, führt beim Spritzgießen des erfindungsgemäßen Lebensmittelbehälters ebenfalls zu einem sauerstoffdichten, biologisch abbaubaren Lebensmittelbehälter und trägt neben der Verlängerung der Mindesthaltbarkeit somit auch zum Abbau von Müllbergen bei. Die in dem erfindungsgemäßen Polymerblend eingesetzten Biopolymere sind dabei bevorzugt nach EN 13432 bzw. EN 14995 biologisch abbaubar, d.h. deren biologischer Abbau kann in industriellen Kompostieranlagen erfolgen. Dies hat den Vorteil, dass der Abbau unter den Bedingungen einer industriellen Kompostieranlage erfolgen kann, d.h. der biologische Abbau findet bei erhöhter Temperatur, erhöhter Luftfeuchtigkeit und bei einem definierten Sauerstoffgehalt binnen weniger Wochen statt.

Zum Verschließen des erfindungsgemäßen Lebensmittelbehälters wird weiter erfindungsgemäß eine Lebensmittel-Deckelfolie zum Verschließen der Öffnung des Kunststoff-Lebensmittelbehälters verwendet. Die Lebensmittel-Deckelfolie kann beispielsweise mittels Siegeln, Verschweißen oder Verkleben auf die Seite des Kragens des Lebensmittelbehälters aufgebracht werden, der der Öffnung des becherförmigen Lebensmittelbehälters zugewandt ist. Erfindungsgemäß kann die Lebensmittelbehälter-Deckelfolie hierzu ein- oder mehrschichtig aufgebaut sein. Eine gemäß einer ersten Ausführungsform einschichtig ausgebildete Deckelfolie ist dabei analog zum becherförmigen Lebensmittelbehälter aus einem Polymerblend hergestellt, dessen eine Komponente PVOH oder ein PVOH-Copolymer ist. Üblicherweise wird eine solche erfindungsgemäße Deckelfolie aus einem PVOH-Polymerblend in einem Extrudierverfahren hergestellt, gegebenenfalls mit anschließendem Recken, wobei jede andere Art der Folienherstellung vom Erfindungsgedanken ebenfalls umfasst ist. Mit dieser Ausführungsform kann eine verbesserte Sauerstoffdichtheit für Lebensmittelbehälter-Deckelfolien erreicht werden, die sonst nicht vollständig sauerstoffdicht sind. Selbstredend können für diese Ausführungsform der erfindungsgemäßen Deckelfolie sowohl Biopolymere als auch Nicht-Biopolymere als zweite Komponente für ein erfindungsgemäß verwendetes Polymerblend eingesetzt werden. Die obigen Ausführungen zu Biopolymeren in Bezug auf den erfindungsgemäßen Lebensmittelbehälter gelten somit analog auch für diese Ausführungsform der erfindungsgemäßen Deckelfolie.

In einer weiteren erfindungsgemäßen Ausführungsform der Deckelfolie wird das zum Erzielen einer Sauerstoffdichtheit verwendete PVOH als eine Beschichtung auf eine Trägerschicht aufgebracht. Dabei weist die erfindungsgemäße Lebensmittel-Deckelfolie in dieser erfindungsgemäßen Ausführungsform zumindest zwei Schichten auf, wobei eine erste Schicht aus einem Cellulose-haltigen Material gebildet wird und die zweite eine PVOH-Schicht darstellt. Durch die Verwendung einer erfindungsgemäßen Lebensmittel-Deckelfolie mit einer PVOH-Schicht wird auch hier die Sauerstoffdichtheit der Deckelfolie erreicht. Eine erfindungsgemäße Lebensmittelverpackungseinheit, die einen erfindungsgemäßen sauerstoffdichten Lebensmittelbehälter umfasst, der mit einer sauerstoffdichten Deckelfolie nach einer der beiden erfindungsgemäßen Ausführungsformen verschlossenen ist, ist somit insgesamt sauerstoffdicht. Zusätzliche Verpackungsbeutel zum sauerstoffdichten Verpacken, die oftmals im Stand der Technik verwendet werden, sind somit nicht mehr erforderlich.

Eine Sauerstoffdichtheit lässt sich durch Auftragen einer PVOH-Schicht auf eine Lebensmittel-Deckelfolie jedoch auch erreichen, wenn deren Trägerschicht aus Aluminium oder aus einer nicht sauerstoffdichten Kunststoffschicht gebildet ist. Wird eine Aluminiumfolie bzw. eine Kunststofffolie verwendet, deren Kunststoff biologisch nicht abbaubar ist, so kann nur der Grundkörper des Lebensmittelbehälters, falls dieser aus Biopolymerblend hergestellt wurde, biologisch abgebaut werden. Der Endverbraucher muss dann, wie derzeit bei der üblichen Mülltrennung oft vorgesehen, die Deckelfolie und den Lebensmittelbehälter getrennt voneinander entsorgen. Bei der Verwendung einer erfindungsgemäßen Lebensmittel-Deckelfolie mit einer Cellulose-haltigen Schicht und einer PVOH-Schicht kann die so gebildete Lebensmittelverpackungseinheit jedoch als Ganzes im Biomüll entsorgt werden.

Speziell bei der Verwendung einer erfindungsgemäßen Lebensmittelverpackungseinheit mit einem aus Biopolymerblend spritzgegossen Lebensmittelbehälter, der mit einer der beiden erfindungsgemäßen Lebensmittelbehälter-Deckelfolien verschlossen ist, die neben PVOH einen Bio-Kunststoff aufweisen, kann die Lebensmittelverpackungseinheit, insbesondere bei der Verwendung als Brühgut-Lebensmittelverpackungseinheit, nach dem Brühvorgang zusammen mit dem darin aufgenommenen Lebensmittel als Biomüll entsorgt werden. Dabei ist die so hergestellte Lebensmittelverpackungseinheit durch die erfindungsgemäße Verwendung von PVOH sauerstoffdicht, wodurch sich die Mindesthaltbarkeitszeit für das darin aufgenommene Lebensmittel entscheidend gegenüber nicht sauerstoffdichten Lebensmittelverpackungseinheiten verlängert.

Die erfindungsgemäß verwendete Lebensmittelbehälter-Deckelfolie mit einer PVOH-Schicht als Sauerstoffbarriere verwendet als Cellulose-haltige Schicht bevorzugt ein Papier, ein Pergamentpapier oder ein Pergamentersatzpapier, wobei das Pergamentpapier bereits eine nassfeste Schicht bildet. Bei der Verwendung von Papier ist gegebenenfalls zur Vermeidung der Aufweichung oder Auflösung des Papiers oder der PVOH-Schicht bei Kontakt mit Feuchtigkeit durch das Lebensmittel selbst oder durch die Lagerart bzw. Verwendung des Lebensmittelbehälters, beispielsweise als Suppenterrine o.ä, eine wasserbeständige, bei Brühgutkapseln weiter bevorzugt eine wasserdampfbeständige zusätzliche dritte Schicht für die erfindungsgemäße Lebensmittelbehälter-Deckelfolie vorzusehen. Diese dritte Schicht kann aus einem ebenfalls biologisch abbaubaren Kunststoff erzeugt sein, welcher beispielsweise durch Laminieren, Aufsprühen oder ähnlichem auf die Lebensmittel-Deckelfolie auftragbar ist. Jedoch können auch biologisch abbaubare Lacke oder Wachse, die nach der Lebensmittelverordnung für Lebensmittel zugelassen sind, bzw. die hierfür zur Zulassung gebracht werden können, erfindungsgemäß für die Ausbildung einer dritten Schicht der Lebensmittel-Deckelfolie zur Anwendung kommen. Werden nicht biologisch abbaubare Kunststoffe zum Erreichen einer Wasserbeständigkeit bzw. Wasserdampfbarriere verwendet, so ist, wie bereits vorhin schon ausgeführt, die Deckelfolie separat von dem Lebensmittelbehälter zu entsorgen, falls dieser aus einem Biopolymerblend hergestellt ist. Sollte der Lebensmittelbehälter selbst nicht aus einem biologisch abbaubaren Kunststoff hergestellt werden, so kann auch eine nicht biologisch abbaubare Lebensmittelbehälter-Deckelfolie zusammen mit dem nicht biologisch abbaubaren Grundkörper im Restmüll entsorgt werden.

Auch bei der Verwendung einer erfindungsgemäßen Lebensmittelbehälter-Deckelfolie, die aus einem PVOH-haltigen Polymerblend hergestellt ist, kann zum Erzielen einer besseren Wasserbeständigkeit bzw. zum Erreichen einer verbesserten Wasserdampfbeständigkeit ein Aufbringen einer weiteren Schicht notwendig sein. Eine in diesem Fall zweite Schicht kann dann, analog zur dritten oder vierten Schicht der anderen Ausführungsform der erfindungsgemäßen Deckelfolie, aus einem Kunststoff, einem Lack oder einem Wachs gebildet werden, der/das für Lebensmittelverpackungen freigegeben ist. Zum Schutz vor Zersetzung des PVOH im Polymerblend kann eine solche Kunststoff-, Lack- oder Wachsschicht auch beidseitig auf die PVOH-Polymerblend-Schicht aufgetragen werden, beispielsweise, wenn die erfindungsgemäße Lebensmittelverpackungseinheit als Heißgetränke-Behälter verwendet werden soll. Zur Vermeidung von Wiederholungen gelten die Ausführung zur biologischen Abbauarbeit des Lebensmittelbehälters und zur ersten Ausführungsform analog auch für die zweite Ausführungsform.

Bevorzugt ist der erfindungsgemäße, sauerstoffdichte Lebensmittelbehälter aus einem Biopolymer-Kunststoffblend spritzgegossen und nach dem Befüllen des Lebensmittelbehälters mit einem Lebensmittel, mit einer ebenfalls biologisch abbaubaren Lebensmittelbehälter-Deckelfolie verschlossen. Das Aufbringen der Lebensmittel-Deckelfolie auf den Kragen des Lebensmittelbehälters kann dabei fachüblich durch Siegeln, Kleben oder Schweißen erfolgen, wobei andere aus dem Stand der Technik bekannte Verfahren ebenfalls vom Erfindungsgedanken umfasst sind.

Zum Erreichen der erfindungsgemäßen Sauerstoffdichtheit weist die erfindungsgemäße Lebensmittelbehälter-Deckelfolie die zuvor angesprochene PVOH-haltigen Schicht auf, welche in einer Ausführungsform der Erfindung durch Aufsprühen, Laminieren, Kleben oder Aufbügeln auf die beispielsweise Cellulose-haltige Schicht oder auf eine Aluminiumfolie oder auf eine andere Kunststoffschicht aufgetragen wird. In der anderen Ausführungsform wird die PVOH-haltige Schicht aus einem Polymerblend gefertigt, das in einer Komponente PVOH enthält. Bei der Verwendung einer Cellulose-haltigen Schicht kann entweder die der PVOH-Schicht zugewandte Seite oder die der PVOH-Schicht abgewandte Seite der Cellulose-haltigen Schicht, die insbesondere aus Papier Pergamentpapier oder Pergamentersatzpapier besteht, bedruckt sein, beispielsweise mit einem Logo, Informationen zu Inhaltsstoffen oder/und dem Mindesthaltbarkeitsdatum und/oder dem Herstellungsdatum.

Bevorzugt wird die Cellulose-haltige-Schicht vor dem Aufbringen der Lebensmittelbehälter-Deckelfolie auf einen erfindungsgemäßen Lebensmittelbehälter bedruckt, wobei sowohl die Bedruckung als auch die Cellulose-haltige Schicht mit einer weiteren Kunststoffschicht oder einem Wachs oder einem Lack zum Erzielen einer Wasserdampfbarriere geschützt werden kann. Die Schicht zum Erreichen einer Wasserdampfbarriere kann jedoch auch auf die PVOH-Schicht aufgebracht werden, wobei die bedruckte Seite dann geeigneter Weise zur PVOH-Schicht gerichtet ist. Die erfindungsgemäße Lebensmittelbehälters-Deckfolie weist in einer Ausführungsform, die beispielsweise für trockene im Lebensmittelbehälter aufzunehmende Lebensmittel vorgesehen ist, drei Schichten auf. Dabei kann die Cellulose-haltige Schicht beim verschlossenen Lebensmittelbehälter dem Lebensmittel zugewandt sein und die die Wasserdampfbarriere bildende Schicht, ist nach außen gewandt und umgekehrt. Zwischen beiden Schichten ist dann die PVOH-Schicht angeordnet. Zum Schutz der beiden Schichten der erfindungsgemäßen Lebensmittelbehälter-Deckelfolie können insbesondere biologisch abbaubare Kunststoffe eingesetzt werden, welche nach EN 13432 bzw. EN 14995 biologisch abbaubar sind. Zur Vermeidung von Wiederholungen wird auf die oben genannten Erläuterungen zum Biomaterial verwiesen. Ein analoges gilt für die zweite Art der erfindungsgemäßen Deckelfolie, wobei hier die beiden Schichten aus PVOH und Cellulose durch eine einzige Schicht aus einem PVOH-Polymerblend bzw. einem PVOH-Copolymer-Polymerblend gebildet wird.

Die erfindungsgemäße Lebensmittelverpackungseinheit aus einem Lebensmittelbehälter, der aus einem Polymerblend spritzgegossen ist, welches als eine Komponente ein PVOH aufweist, ist somit bei Verwendung einer Lebensmittel-Deckelfolie mit einer PVOH-haltigen Schicht vollständig sauerstoffdicht und somit zur Aufbewahrung sauerstoffempfindlicher Lebensmittel geeignet. Bei der Verwendung der erfindungsgemäßen Lebensmittelverpackungseinheit als Kaffeekapsel oder Teekapsel für die Verwendung in Kaffeebereiter bzw. Espressomaschinen, die mit Kaffeekapseln ein entsprechendes Brühgetränk erzeugen, ist gegebenenfalls auf der der Öffnung abgewandten Seite des Kragens eine Dichtung aufzubringen, die die Brühgutkapsel gegenüber einer Maschinenaufnahme abdichtet. Das Dichtungsmaterial weist hierzu bevorzugt eine geringere Härte auf, als das verwendete Polymermaterial. Dabei ist die Verwendung einer Dichtung je nach eingesetztem Biopolymerblend nicht immer notwendig und nur dann erforderlich, falls die Materialhärte des eingesetzten Polymerblends / Biopolymerblends für das Erreichen einer Abdichtung des Kapselkragens gegenüber der Aufnahme der Brühgutmaschine nicht erzielt werden kann. Selbstredend sollte bei Verwendung eines Biopolymerblends zur Herstellung des Lebensmittelbehälters auch ein Dichtungsmaterial verwendet werden, welches selbst biologisch abbaubar ist, insbesondere nach EN 13432 oder EN 14995.

Im Folgenden werden anhand von Figuren bevorzugte Ausführungsbeispiele des erfindungsgemäßen Lebensmittelbehälters und der erfindungsgemäßen Lebensmittelbehälter-Deckelfolie sowie der Lebensmittelbehälter-Verpackungseinheit in Einzelheiten dargestellt, wobei weder die Figuren noch die Beschreibung hierzu den Erfindungsgedanken auf diese Ausführungsformen einschränkt. Es zeigen:
- Figur 1: eine perspektivische Schnittdarstellung eines Lebensmittelbehälters gemäß der Erfindung;
- Figur 2: eine perspektivische Schnittdarstellung eines Lebensmittelbehälters gemäß der Erfindung mit Dichtung;
- Figur 3: eine perspektivische Schnittdarstellung eines mit einer ersten Ausführungsform der erfindungsgemäßen Lebensmittelbehälter-Deckelfolie verschlossenen erfindungsgemäßen Lebensmittelbehälters;
- Figur 4: eine perspektivische Schnittdarstellung eines mit einer zweiten Ausführungsform der erfindungsgemäßen Lebensmittelbehälter-Deckelfolie verschlossenen erfindungsgemäßen Lebensmittelbehälters;
- Figur 5: eine erfindungsgemäße Lebensmittelverpackungseinheit mit einem darin aufgenommenen rieselfähigen Lebensmittel;
- Figur 6: eine erfindungsgemäße Lebensmittelverpackungseinheit mit einem darin aufgenommenen pastösen Lebensmittel.

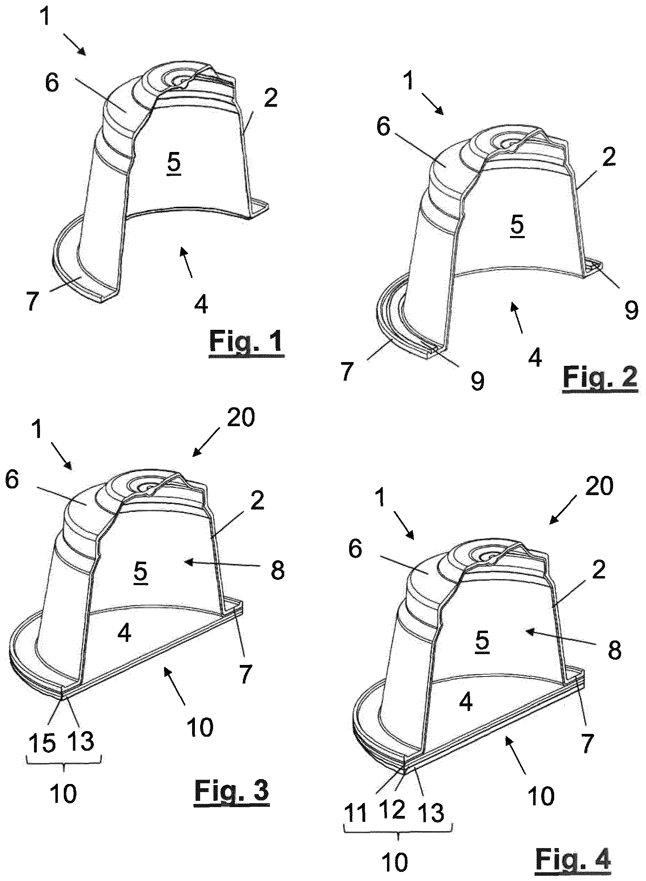

In Figur 1 ist eine beispielhafte Ausführungsform des erfindungsgemäßen Lebensmittelbehälters 1 als perspektivische Schnittansicht einer Kaffeekapsel dargestellt. Der erfindungsgemäße Lebensmittelbehälter 1 ist dabei aus einem becherförmigen Grundkörper 2 ausgebildet, der eine Wandung 5, einen Boden 6 sowie einen Kragen 7 aufweist. Die Wandung 5 umgibt eine Öffnung 4, welche von einem nach außen über die Wandung 5 vorstehenden Kragen 7 umgeben ist. Über die Öffnung 4 ist der becherförmige Lebensmittelbehälter mit einem Lebensmittel befüllbar. Wie bereits oben ausgeführt, kann es für Einsatzzwecke des erfindungsgemäßen Lebensmittelbehälters 1 notwendig sein, auf der der Öffnung 4 abgewandten Seite des Kragens 7 eine Dichtung 9 aufzubringen, die beispielsweise den Lebensmittelbehälter 1, in seiner Verwendung als Kaffeekapsel oder Teekapsel in entsprechenden Zubereitungsmaschinen gegenüber der Maschinenaufnahme abdichtet. Eine solche Ausführungsform ist in Figur 2 gezeigt.

Figur 3 zeigt einen mit einer Deckelfolie 10 verschlossenen Lebensmittelbehälter 1, wobei die erfindungsgemäße Lebensmittelbehälter-Deckelfolie 10 aus einer PVOH-Polymerblend-Folie 15 hergestellt ist. Diese kann beispielsweise aus einem Polymerblend aus einem PE und EVOH-Copolymer hergestellt sein und durch Aufbügeln, Aufschweißen oder Aufkleben auf den Kragen 7 des Lebensmittelbehälters aufgebracht sein. In dieser Ausführung ist die Lebensmittelverpackungseinheit 20 für darin aufgenommene Lebensmittel sauerstoffdicht und für zumindest kurze Zeit Wasser- bzw. Wasserdampfbeständig. Ist die Wasser- und/oder Wasserdampfbeständigkeit für die vorgesehene Verwendung der Lebensmittelverpackungseinheit nicht ausreichend, so können einseitig oder beidseitig der PVOH-Polymerblend-Schicht 15 Schichten 13 und 14 aus Kunststoff, Lack oder Wachs aufgebracht werden, die die erforderliche Wasser- bzw. Wasserdampfbeständigkeit der Deckelfolie 10 gewährleisten.

Figur 4 zeigt ein zweites Ausführungsbeispiel eines erfindungsgemäßen Lebensmittelbehälters 1 in einer perspektivischen Schnittdarstellung, wobei dieser mit einer erfindungsgemäßen Lebensmittelbehälter-Deckelfolie 10, die auf dem Kragen 7 aufgebracht ist, verschlossenen ist. Die in Figur 4 gezeigte erfindungsgemäße zweite Ausführungsform der Lebensmittelbehälter-Deckelfolie 10 ist in einer dreischichtigen Ausführungsform dargestellt, wobei eine erste Schicht 11 beispielsweise eine Cellulose-haltige Schicht, eine zweite Schicht 12 beispielsweise eine PVOH-Schicht darstellt und die dritte Schicht 13 eine Kunststoffschicht ist, die für die beiden zuvor genannten Schichten eine Wasserdampfbarriere bildet. Dabei kann die dritte Schicht 13 aus einem Kunststoffmaterial, aus einem Wachs oder aus einem für Lebensmittelbehälter zugelassenen Lack gebildet werden. Alle drei Schichten sind in der Figur 3 aus Darstellungsgründen übertrieben dick dargestellt, damit eine visuelle Unterscheidung der einzelnen Schichten möglich ist. In der Praxis sind alle drei Schichten der erfindungsgemäßen Lebensmittel-Deckelfolie 10 zusammen jedoch beispielsweise in einem Dicken-bereich für herkömmliche Lebensmittel-Folien. Hier ist insbesondere für die als Wasserdampfbarriere wirkende dritte Schicht 13 eine Schichtdicke im Zehntelmillimeter- bzw. Nanometerbreich üblich. Die die erste Schicht 11 bildende Cellulose-haltige Schicht ist üblicherweise ebenfalls im Zehntelmillimeterbereich angesiedelt. Für die PVOH-Schicht 11 gilt ein ähnliches, wobei zum Erreichen einer gewünschten Sauerstoffdichtheit einer erfindungsgemäßen Lebensmittel-Deckelfolie 10 das Material der weiteren, Cellulose-haltigen Schicht 11 sowie deren Schichtdicke zu berücksichtigen ist. Bei Vorhandensein einer dritten Schicht 13 oder gar vierten Schicht 14 zum Erzielen einer Wasserdampfbarriere kann die Schichtdichte zur Erzielung einer geforderten Sauerstoffdichtigkeit variieren bzw. an die Art der Folie bzw. an die Anzahl der Schichten angepasst werden. Welche Folie zum Einsatz kommt hängt dabei von der vorgesehenen Verwendung der Lebensmittelverpackungseinheit ab.

Die erfindungsgemäße Lebensmittelbehälter-Deckelfolie 10 verschließt, wie in den Figuren 3 und 4 dargestellt, den erfindungsgemäßen Lebensmittelbehälter 1, so dass ein für Lebensmittel geeignetes Aufnahmevolumen 8 gebildet wird. Im allgemeinen Teil wurde bereits ausgeführt, dass die hierfür verwendeten Kunststoffe des Polymerblends für das Spritzgießen des Lebensmittelbehälters 1 lebensmittelecht sein sollen, d.h. für Lebensmittel zugelassen sind oder für die eine entsprechende Zulassung beantragt werden kann. Zur Erreichung der Sauerstoffdichtheit ist eine Komponente des spritzgegossenen Polymerblends PVOH und eine Schicht der Lebensmittelbehälter-Deckelfolie 10 eine PVOH-haltige Schicht, hier die zweite Schicht 12 oder die Schicht 15, ein mögliches Ausführungsbeispiel.

Ist der Lebensmittelbehälter 1, bzw. der mit einer Deckelfolie 10 verschlossene Lebensmittelbehälter 1, welcher nun eine Verpackungseinheit 20 bildet, für den Einsatz als Kaffeekapsel und zur Aufnahme von pulverförmigen bzw. gemahlenen Kaffee vorgesehen, und wird diese Kaffeekapsel ausschließlich trocken gelagert, so kann darüber nachgedacht werden, die als Wasserdampfbarriere wirkenden Schichten 13 und 14 komplett entfallen zu lassen. Wird die Wasserdampfbarriere nicht verwendet und ist gleichzeitig die Cellulose-haltige Schicht aus einem Papier oder einem Pergamentersatzpapier gefertigt, das nicht nassfest ist, so sollte die PVOH-Schicht innenliegend angeordnet werden. Mit der innenliegenden PVOH-Schicht, die dem Grundkörper 2 des Lebensmittelbehälters 1 zugewandt ist, kann die Deckelfolie 10 beispielsweise in einfacher Art und Weise mit dem Kragen des Lebensmittelbehälters 1 verschweißt, verklebt oder versiegelt werden. Selbstredend gilt das auch für eine umgekehrte oder andere Anordnung der Schichten der Deckelfolie 10.

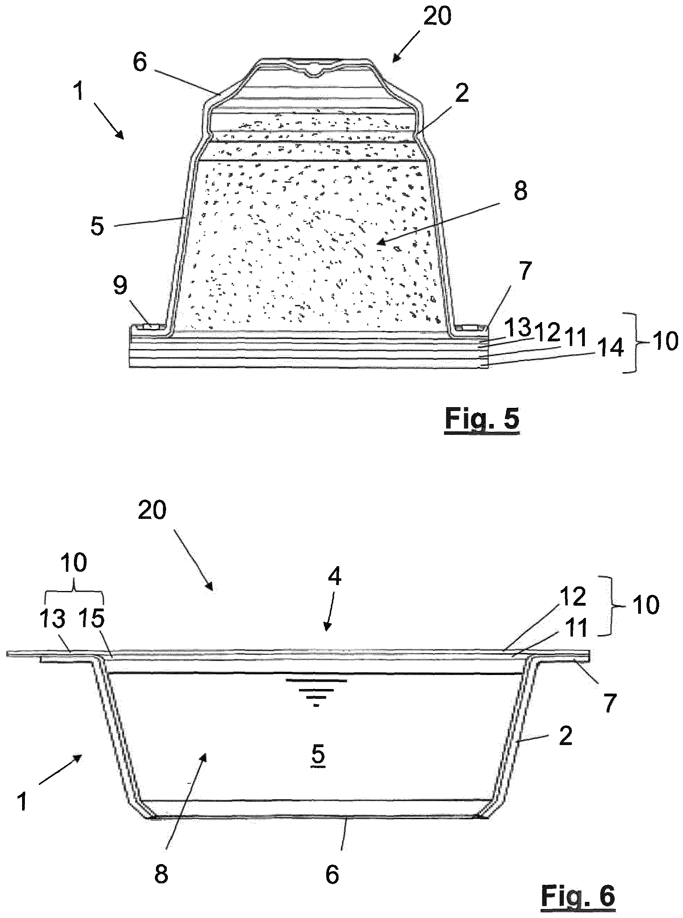

Eine mit Kaffee gefüllte Lebensmittelverpackungseinheit 20 ist in Figur 5 dargestellt, wobei die den Lebensmittelbehälter 1 verschließende Deckelfolie 10 aus vier Schichten aufgebaut ist. Dabei ist die als Wasserdampfsperre ausgebildete dritte Schicht 13 dem Kragen 7 des Grundkörpers 2 des Lebensmittelbehälters 1 zugewandt, die zweite Schicht 12 aus PVOH bildet die zweitinnerste Schicht und die aus Cellulose-haltigem Material gebildete Schicht 11 bildet eine dritte Schicht, welche beispielsweise eine nach außen weisende Bedruckung aufweisen kann. Zur abschließenden Wasser-, insbesondere Wasserdampfbeständigkeit kann eine vierte Schicht 14 beispielsweise aus einem Kunststoff, einem Wachs oder einem Lack aufgetragen werden, die die Celluloseschicht bzw. die PVOH-haltige Schicht vor Feuchtigkeitsschäden schützt. Mit einer derartigen drei- bzw. vierschichtigen Deckelfolie 10 ist die erfindungsgemäße Lebensmittelverpackungseinheit nicht nur sauerstoffdicht, sondern auch wasser- bzw. wasserdampfbeständig. Dies stellt beispielhaft eine Verwendung der erfindungsgemäßen Lebensmittelverpackungseinheit als Kaffeebrühkapsel dar. Andere fachübliche Verwendungsarten sind selbstredend vom Erfindungsgedanken mit umfasst.

In Figur 6 ist die erfindungsgemäße Lebensmittelverpackungseinheit 20 beispielhaft als Joghurtbecher oder als Kaffeesahnebehälter dargestellt und hat in ihrem Aufnahmevolumen 8 ein pastöses oder flüssiges Lebensmittel aufgenommen. Der becherförmige Grundkörper 2 ist dabei über den Kragen 7 mit einer zweischichtigen Deckelfolie 10 verschlossen, wobei die PVOH-haltige Schicht 12 dem Kragen 7 zugewandt ist. So wird verhindert, dass das flüssige bzw. pastöse Lebensmittel mit der Cellulose-haltigen Schicht 11 der Deckelfolie 10 in Kontakt kommt. Die Cellulose-haltige Schicht 11 kann sowohl dekorativ als auch informativ bedruckt sein, um dem erfindungsgemäßen Lebensmittelbehälter bzw. der erfindungsgemäßen Lebensmittelverpackungseinheit ein anmutiges Aussehen zu verleihen. Bei der zweiten erfindungsgemäßen Ausführungsform könnte man beispielsweise die Polymerblend-Schicht 15 dem Kragen 7 zugewandt anordnen und diese gegen Beeinträchtigung durch Feuchtigkeit von außen durch eine Wasser- oder Wasserdampfbarriere-Schicht 13 schützen. Ein Gleiches kann für beide Ausführungsformen auch durch eine innen angeordnete Wasser- oder Wasserdampfbarriere-Schicht 14 (nicht gezeigt) erfolgen, wenn dies erforderlich ist, beispielsweise wenn das im Lebensmittelbehälter 1 aufgenommene Lebensmittel mit der PVOH-haltigen Schicht 12 oder 15 in Wechselwirkung tritt und dies unerwünscht ist.

In einer beispielhaften Ausführungsform ist der becherförmige Grundkörper 2 aus einem Polymerblend hergestellt, dessen eine Komponente zum Erzielen einer Sauerstoffdichtheit PVOH ist und dessen andere Komponente einen Biopolymer-Kunststoff darstellt. In einer solchen Ausgestaltung sind die in den Figuren 3 bis 5 dargestellten erfindungsgemäßen Lebensmittelverpackungseinheiten 20 vollständig biologisch abbaubar, d.h. nach Entnahme oder Verwendung des darin aufgenommen Lebensmittels kann die erfindungsgemäße Lebensmittelverpackungseinheit 20 als Biomüll entsorgt werden.

Insgesamt wird mit dem erfindungsgemäßen Lebensmittelbehälter 1, der mit einer erfindungsgemäßen Deckelfolie 10 verschließbar ist, eine erfindungsgemäße Lebensmittelverpackungseinheit 20 bereitgestellt, die durch die Verwendung von PVOH als Beimengung zu einem spritzgießbaren Polymerblend und durch Verwendung von PVOH in oder auf einer Deckelfolie sauerstoffdicht ist. Mit diesen erfindungsgemäßen Ausgestaltungen werden die aufwendigen Beschichtungsverfahren, insbesondere für den Lebensmittelbehälter 1 zum Erzielen einer Sauerstoffdichtheit, die aus dem Stand der Technik bekannt sind, weitestgehend vermieden. Die erfindungsgemäße Lebensmittelverpackungseinheit 20 ermöglicht es somit durch einfache Verwendung von PVOH als Beimengung zum Spritzgusskunststoff oder als Folienmaterial als auch als Beschichtung einer Deckelfolie die ein-, zwei-, drei- oder vierschichtig aufgebaut sein kann, in einer einfachen und kostengünstigen Art und Weise eine Verpackungseinheit 20 für Lebensmittel bereitzustellen, die, bei der Verwendung von Biopolymeren als weitere beteiligte Materialien, zudem biologisch abbaubar ist. Bevorzugt ist die komplette Lebensmittelverpackungseinheit nach EN 13432 bzw. EN 14995 in einem industriellen Kompostierverfahren biologisch abbaubar.

## Patentansprüche

1. Lebensmittelbehälter (1) zur Aufnahme eines flüssigen, pastösen oder rieselfähigen Lebensmittels mit einem einstückigen, spritzgegossenen, becherförmigen Grundkörper (2) mit einer Wandung (5), einem Boden (6) und einem nach außen vorstehenden Kragen (7), der eine Öffnung (4) umgibt, **dadurch gekennzeichnet,**
**dass** der Lebensmittelbehälter (1) einschichtig aus einem Polymerblend spritzgegossen ist, wobei das Polymerblend zumindest zwei Komponenten aufweist, von denen eine erste Komponente PVOH oder ein PVOH-Copolymer und eine zweite Komponente ein PE-, ein PS-, ein PP-, ein PA-Kunststoff oder ein biologisch abbaubares Biopolymer ist und der Gewichtsanteil an PVOH im Polymerblend zwischen 15-Gew.% und 70-Gew.% beträgt.

2. Lebensmittelbehälter (1) nach Anspruch 1, bei dem das Biopolymer ein gemäß EN 13432 bzw. EN 14995 kompostierbarer Kunststoff ist.

3. Lebensmittelbehälter (1) nach einem der Ansprüche 1 oder 2, bei dem die der Öffnung (4) abgewandte Seite des Kragens (7) eine Dichtung (9) aufweist, die eine geringere Materialhärte aufweist als das Polymerblend-Material.

4. Lebensmittelbehälter (1) nach Anspruch 3, bei dem das Material der Dichtung (9) biologisch abbaubar ist, bevorzugt gemäß EN 13432 bzw. EN 14995.

5. Lebensmittelbehälter-Deckelfolie (10), welche zum Verschließen einer Öffnung eines Kunststoff-Lebensmittelbehälters durch Siegeln, Verschweißen oder Verkleben auf den Kunststoff-Lebensmittelbehälter aufbringbar ist, **dadurch gekennzeichnet, dass** die Lebensmittelbehälter-Deckelfolie (10) einschichtig aus einem Polymerblend hergestellt ist, das zumindest zwei Komponenten aufweist, von denen eine erste Komponente PVOH oder ein PVOH-Copolymer und eine zweite Komponente ein PE-, ein PS-, ein PP-, ein PA-Kunststoff oder ein biologisch abbaubares Biopolymer ist und der Gewichtsanteil an PVOH im Polymerblend zwischen 15-Gew.% und 70-Gew.% beträgt.

6. Lebensmittelbehälter-Deckelfolie (10) nach Anspruch 5, bei dem das Biopolymer ein gemäß EN 13432 bzw. EN 14995 kompostierbarer Kunststoff ist.

7. Lebensmittelbehälter-Deckelfolie (10) nach einem der Ansprüche 5 oder 6, bei dem die Deckelfolie einseitig oder beidseitig mit einer Schicht (13, 14) aus einem für Lebensmittelverpackungen zugelassenen Kunststoff, Wachs oder Lack beschichtet ist, wobei die zumindest einseitig aufgebrachte Schicht (13, 14) eine Wasserdampfbarriere bereitstellt.

8. Lebensmittelverpackungseinheit (20) mit einem Lebensmittelbehälter (1) nach einem der Ansprüche 1 bis 4, bei dem die Öffnung (4) des Grundkörpers (2) durch eine auf den Kragen (7) aufgebrachte, Lebensmittelbehälter-Deckelfolie (10) nach einem der Ansprüche 5 bis 7 verschlossen ist.

9. Lebensmittelverpackungseinheit (20) mit einem Lebensmittelbehälter (1) nach einem der Ansprüche 1 bis 4, bei dem die Öffnung (4) des Grundkörpers (2) durch eine auf den Kragen (7) aufgebrachte Lebensmittelbehälter-Deckelfolie (10) verschlossen ist, wobei eine Schicht der Lebensmittelbehälter-Deckelfolie (10) aus einer Aluminiumfolie oder einer biologisch nicht abbaubaren Kunststofffolie gebildet ist.

10. Lebensmittelverpackungseinheit (20) nach einem der Ansprüche 8 oder 9, bei dem die Lebensmittelbehälter-Deckelfolie (10) mit dem Kragen (7) des Grundkörpers (2) durch Siegeln, Kleben oder Schweißen verbunden ist.

## Claims

1. A food container (1) for receiving a liquid, pasty or free-flowing food, comprising a single-component, injection-molded, cup-shaped base body (2) with a wall (5), a bottom (6), and an outwardly projecting collar (7), which surrounds an opening (4), **characterized in that** the food container (1) is injection-molded in a single layer from a polymer blend, wherein the polymer blend comprises at least two components, of which a first component is PVOH or a PVOH copolymer and a second component is a PE, PS, PP, or PA plastic or a biodegradable biopolymer, and the weight proportion of the PVOH in the polymer blend is between 15% by weight and 70% by weight.

2. The food container (1) according to Claim 1, in which the biopolymer is a compostable plastic in accordance with EN 13432 and/or EN 14995.

3. The food container (1) according to one of Claims 1 and 2, in which the side of the collar (7) facing away from the opening (4) has a seal (9), which has a lower material hardness than the polymer blend material.

4. The food container (1) according to Claim 3, in which the material of the seal (9) is biodegradable in accordance with EN 13432 and/or EN 14995.

5. A food container cover film (10), which can be applied to the plastic food container by sealing, bonding, or adhering in order to close an opening, **characterized in that** the food container cover film (10) is produced in a single layer from a polymer blend that comprises at least two components, of which a first component is PVOH or a PVOH copolymer and a second component is a PE, PS, PP, or PA plastic or a biodegradable biopolymer, and the weight proportion of the PVOH in the polymer blend is between 15% by weight and 70% by weight.

6. The food container cover film (10) according to Claim 5, in which the biopolymer is a compostable plastic in accordance with EN 13432 and/or EN 14995.

7. The food container cover film (10) according to one of Claims 5 and 6, in which the cover film is coated on one or both sides with a layer (13, 14) consisting of a plastic, wax, or lacquer that is admissible for food packaging, wherein the layer (13, 14) applied to at least one side provides a water vapor barrier.

8. A food packaging unit (20) with a food container (1) according to one of Claims 1 to 4, in which the opening (4) in the base body (2) is closed by a food container cover film (10) according to one of Claims 5 to 10, which is applied to the collar (7).

9. A food packaging unit (20) with a food container (1) according to one of Claims 1 to 4, in which the opening (4) in the base body (2) is closed by a food container cover film (10), which is applied to the collar (7), wherein a layer of the food container cover film (10) is formed from an aluminum foil or a non-biodegradable plastic film.

10. The food packaging unit (20) according to one of Claims 8 and 9, in which the food container cover film (10) is connected to the collar (7) of the base body (2) by sealing, adhering, or bonding.

## Revendications

1. Contenant alimentaire (1) destiné à recevoir un produit alimentaire fluide, pâteux ou coulant, composé d'un corps de base (2) monobloc, en forme de godet et moulé par injection avec une paroi (5), un fond (6) et un rebord (7) saillant vers l'extérieur entourant une ouverture (4), **caractérisé en ce que**
le contenant alimentaire (1) est moulé par injection en une seule couche à partir d'un mélange de polymères qui contient au moins deux composantes, dont une première composante est un alcool polyvinylique (PVOH) ou un copolymère de PVOH et une deuxième composante est un plastique PE, PS, PP ou PA ou un biopolymère biodégradable, et le pourcentage en poids de PVOH dans le mélange de polymères constitue entre 15 % et 70 % du poids dudit mélange.

2. Contenant alimentaire (1) selon la revendication 1, dans lequel le biopolymère est un plastique compostable tel que défini dans la norme EN 13432 ou EN 14995.

3. Contenant alimentaire (1) selon l'une des revendications 1 ou 2, dans lequel le côté du rebord (7) opposé à l'ouverture (4) présente un joint (9) dont la dureté du matériau est inférieure à celle du matériau constitué par le mélange de polymères.

4. Contenant alimentaire (1) selon la revendication 3, dans lequel le matériau du joint (9) est biodégradable, de préférence en vertu de la norme EN 13432 ou EN 14995.

5. Opercule (10) de contenant alimentaire, qui peut être appliqué sur le contenant alimentaire en plastique pour fermer l'ouverture du contenant alimentaire en plastique par scellement, soudage ou collage, **caractérisé en ce que** l'opercule (10) de contenant alimentaire est constitué d'une seule couche d'un mélange de polymères qui contient au moins deux composantes, dont une première composante est un alcool polyvinylique (PVOH) ou un copolymère de PVOH et une deuxième composante est un plastique PE, PS, PP ou PA ou un biopolymère biodégradable, et le pourcentage en poids de PVOH dans le mélange de polymères constitue entre 15 % et 70 % du poids dudit mélange.

6. Opercule (10) de contenant alimentaire selon la revendication 5, dans lequel le biopolymère est un plastique compostable tel que défini dans la norme EN 13432 ou EN 14995.

7. Opercule (10) de contenant alimentaire selon l'une des revendications 5 ou 6, dans lequel l'opercule est revêtu, sur une face ou sur les deux faces, d'une couche (13, 14) composée d'une matière plastique, d'une cire ou d'une laque autorisée pour l'emballage alimentaire, la couche (13, 14) appliquée à tout le moins sur une face formant une barrière anti-vapeur d'eau.

8. Unité d'emballage alimentaire (20) comprenant un contenant alimentaire (1) selon l'une des revendications 1 à 4, dans lequel l'ouverture (4) du corps de base (2) est fermée par un opercule (10) de contenant alimentaire appliqué sur le rebord (7) selon l'une des revendications 5 à 10.

9. Unité d'emballage alimentaire (20) comprenant un contenant alimentaire (1) selon l'une des revendications 1 à 4, dans lequel l'ouverture (4) du corps de base (2) est fermée par un opercule (10) de contenant alimentaire, une couche de l'opercule (10) du contenant alimentaire étant constituée d'un film en aluminium ou d'un film plastique non biodégradable.

10. Unité d'emballage alimentaire (20) selon l'une des revendications 8 ou 9, dans lequel l'opercule (10) de contenant alimentaire est relié au rebord (7) du corps de base (2) par scellement, collage ou soudage.
